# EUROPEAN PATENT APPLICATION

(11) **EP 4 296 982 A1**
(43) Date of publication of application: **27.12.2023**
(21) Application number: 22180405.7
(22) Date of filing: 22.06.2022
(51) Int. Cl.: G07D 7/121, G07D 7/20, H04N 1/193

(54) **DEVICE AND METHOD FOR IMAGE RECORDING**

(71) Applicant: CI Tech Sensors AG, 3400 Burgdorf (CH)
(72) Inventor: STÖCKLI, Armin L., 3063 Ittigen (CH); VACLAV, Blechta, 3400 Burgdorf (CH)
(74) Representative: Viering, Jentschura & Partner mbB Patent- und Rechtsanwälte

(57) **Abstract**

In various embodiments, a device and a method for image recording are provided. The device may include a guiding device (1) configured to guide at least an object (2) in an object plane (1a), at least a driving device (3) configured to transport the object (2) in the object plane (1a) in a transport direction (4), an image plane (5), at least a contact image sensor including at least a light source (6) for illuminating of the object (2), at least a light-sensitive line-pixel array (7). The light-sensitive line-pixel array (7) is arranged in a direction transverse to the transport direction (4) and is arranged in the image plane (5), a control device (8) configured to control the light source (6) and/or the light-sensitive line-pixel array (7) and configured to determine a signal generated by the light-sensitive line-pixel array (7). The device may further include an optical device (9) arranged between the object plane (1a) and the image plane (5). The optical device (9) includes at least a plurality of rod lenses (10), wherein the rod lenses (10) are arranged in at least one row (14a, 14b) in the direction transverse to the transport direction (4) of the object (2). The optical device (9) is configured to guide a light beam (13) emitted from the light source (6) and partially reflected by the object (2) via at least the rod lenses (10) to the light-sensitive line-pixel array (7) and configured to broaden a sampling area in the transport direction (4) before the light beam incides at the light-sensitive line-pixel array (7).

## Description

Various embodiments relate generally to a device and a method for image recording, especially, a device and method for image recording with compensated optical aberration.

Contact Image Sensors (CIS) cameras may record images of transported banknotes (or other media) via a pixel sensor array, e.g., a photo-sensitive Complementary Metal-Oxide-Semiconductor (CMOS) active pixel sensor array. Transported banknotes may be illuminated via LEDs and lightguides. A rod lens array may be used as an optical element for imaging.

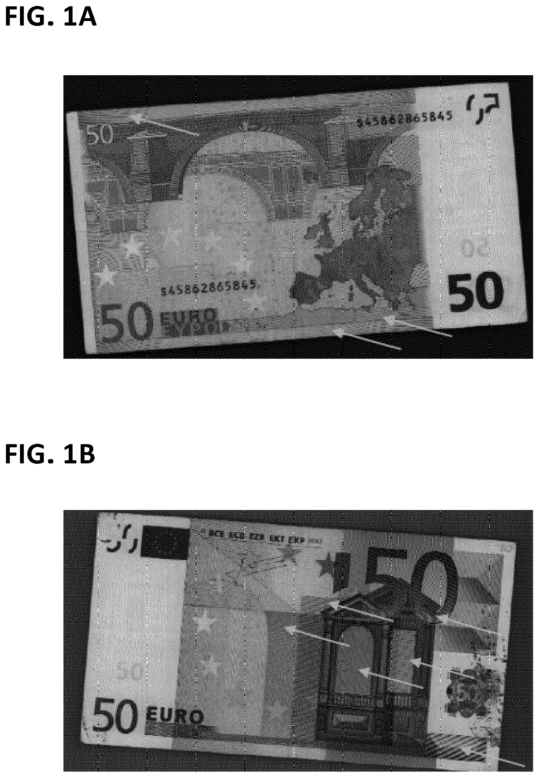

A so-called Moire effect may appear in digital images, which are captured by banknote-processing machines in banknote-processing. The Moire effect may appear in banknote camera images, and may be caused by under-sampling. Moire patterns appear in areas on banknotes, where a periodical pattern is printed on a banknote as exemplary illustrated by arrows on the banknotes in FIGS. 1A and 1B. Moire patterns' structure depend on a banknote angle. Since banknotes are transported upon randomly distributed angles in banknote-processing, the banknote images captured by a camera are irreproducible. Emergence of Moire pattern in banknote images causes inadequate performance of algorithms, which are used for banknote recognition, authentication, and sorting. Imaging through rod lenses is, e.g., 1:1. Photo-sensitive CMOS active pixel sensors may have a size of 100 µm (micrometer) in the banknote-transport direction, while scanning step per image line may be 254 µm. This discrepancy may cause a known effect in digital imaging technology, the so-called under-sampling. Moire effects are a direct consequence of the under-sampling and existence of periodical line patterns (for example intaglio) on the banknotes. A high-quality, distortion-free imaging is desirable to improve functionality of banknote-processing devices.

In various embodiments, a device and a method are provided to reduce Moire effects and under-sampling via implementation of correction optics into a CIS camera used in high-speed banknote processing devices.

In various embodiments, a device and a method for image recording are provided, which may provide a reduction of under-sampling and, which may modify the 1:1 imaging through rod lenses via implementation of an optical device, e.g., a correction lens, a prism, a shaping of inlet/outlet imaging surfaces of a rod lens.

In various embodiments, a device for image recording may include a guiding device configured to guide at least an object in an object plane, at least a driving device configured to transport the object in the object plane in a transport direction, an image plane, at least a contact image sensor including at least a light source for illuminating of the object, at least a light-sensitive line-pixel array, wherein the light-sensitive line-pixel array is arranged in a direction transverse to the transport direction and is arranged in the image plane, a control device configured to control the light source and/or the light-sensitive line-pixel array and configured to determine a signal generated by the light-sensitive line-pixel array, and an optical device arranged between the object plane and the image plane. The optical device may include at least a plurality of rod lenses, wherein the rod lenses are arranged in at least one row in the direction transverse to the transport direction of the object. The optical device may be configured to guide a light beam emitted from the light source and partially reflected by the object via at least the rod lenses to the light-sensitive line-pixel array and configured to broaden a sampled area in the transport direction before the light beam incides at the light-sensitive line-pixel array.

The device and the method may provide a high-quality, distortion-free imaging.

The device may reduce an under-sampling.

The device and the method may improve a functionality of a banknote-processing device.

The object may be a banknote or a check, or the like.

The transport direction may be a transport direction of the object.

The driving device may be at least a roller, which may be driven by a motor.

The object plane may be a plane, in which the object is transported.

The image plane may be a plane, in which at least an image of an object, e.g., a banknote, is taken.

A direction transverse to the transport direction may be a direction, which is orthogonal to the transport direction.

A control device may be at least a processor or microprocessor.

The light source may be a light emitting diode (LED) light.

The sampled area in transport direction may be broadened because of under-sampling.

In various embodiments, at least one rod lens of the plurality of rod lenses may be a Selfoc Lens (SLA) array.

In various embodiments, broadening the light beam or rays in the transport direction means that at least a portion of a light beam is deflected using the optical device such that a broader light beam may result, in other words, rays of a light beam may be deflected and/or redirected and/or diverted, e.g. at a transition position or side portion of an optical device.

In various embodiments, the broadening may include that the ray(s) and/or the light beam(s) is/are divergent and the rate of "broadening" is changed via a lens. In case of a divergent light a broadening may happen automatically. In other words, the broadening may include a dispersing or defocusing or diverging and a sampled area in transport direction in the object plane may be broadened because of under-sampling.

In various embodiments, a light beam, which is emitted by at least a light beam is reflected by a surface of a banknote and part of the light beam is reflected via the optical device e.g., the light beam passes at least a rod lens or a plurality of rod lenses, e.g., the light beam passes through a plurality of rod lenses and a correction optics, e.g., a correction lens or a correction prism.

In various embodiments, the optical device may be configured to broaden a sampled area in the transport direction of an object in the object plane before the light beam incides at the light-sensitive line-pixel array and/or at the object plane.

The rod lenses may be arranged in two (or more, e.g. three, four, five, six, and even more) rows. The rows may be arranged adjacently and parallelly.

A first row may be displaced from a second row in the direction transverse to the transport direction by a predetermined distance, e.g., a distance in a range of about 170 µm to 200 µm, for example a distance of about 189 µm.

In various embodiments, a plurality of rod lenses rows, e.g., more than two, may be used.

An area between the rows may be filled by an adhesive fill material.

In various embodiments, the plurality of rod lenses may be arranged in a so called closest packing configuration or in a hexagonal honeycomb lattice pattern.

The optical device may be configured to guide the light beam and to overlap at least a first portion of the light beam and a second portion of the light beam. In other words, a first portion of a light beam may intersect a second portion of the light beam. For example, a first portion of a light beam may be deflected and a second portion of the light beam may be deflected such that the deflected portions of the light beam may intersect each other after leaving the optical device and before the first and second light beams incides at the image plane and/or at least a pixel array.

In various embodiments, the optical device may be configured to reduce a scanning step, e.g., of a value of 254 µm, in the object plane in the transport direction by broadening and/or splitting light beams or rays by a value of ¼, e.g., 254 µm divided by a value of 4 equals 63,5 µm.

A scanning step of the device may have a value of 254 µm for 100 dots per inch (dpi). For example, the device may have a photo-sensitive CMOS active pixel sensor, which may have a size of about 100 µm, e.g. 100 µm in the banknote-transport direction. A scanning step per image line may be a value of about 254 µm, e.g., 254 µm.

An inch may be of a value of 2,54 centimeter.

In various embodiments, the optical device may include at least a correction lens configured to broaden the light beam and a sampling area in the transport direction on the object plane.

In various embodiments, the sampling area may be arranged in the object plane.

In various embodiments, the correction lens may be a cylindrical diverging lens and/or a plano concave cylindrical lens.

The correction lens may be configured to cover the at least one row of the rod lenses and/or the light-sensitive line-pixel array in the direction transverse to the transport direction. In other words, the correction lens may have a length in a direction transverse to the transport direction which is at least the length of a row of rod lenses and/or a length of the object to be scanned.

In various embodiments, the correction lens may be arranged between the rod lenses and the line-pixel array and/or the image plane. In other words, a light beam reflected by an object in the object plane passes the rod lens(es) and passes the correction lens and then reaches the image plane.

The correction lens may be adjacent to the rod lenses and/or in contact with the rod lenses.

In various embodiments, the optical device may include at least a correction prism configured to split the light beam in the transport direction and to broaden a sampling area in the transport direction of the object on the object plane.

The correction prism may be a triangular prism and/or at least an inlet surface of the correction prism may be inclined in relation to an outlet surface of a base area of the correction prism by a predetermined angle α.

The correction prism may include a rectangular base portion and may have an inclined inlet surface, e.g., by a value of 2.6 degrees in relation to the base portion.

In various embodiments, the correction prism may have a pentagonal form when seen from a side view, e.g., along a longitudinal direction of the correction prism.

At least an inlet surface of, e.g., a lens, a prism or a rod lens, may be a shaped surface. In various embodiments, the inlet surface may be a surface, which is oriented to the object plane. At least an inlet surface of at least a rod lens may be curved. In other words, the inlet surface may be convex curved or concave curved.

In various embodiments, any kind of rod lens surface shaping using any arbitrary mathematical function may be used to achieve the desired broadening of rays.

In various embodiments, at least an inlet surface of at least a rod lens may be curved and inclined in relation to an outlet surface of a base area of the correction prism by a predetermined angle α. In other words, a surface of an optical device may be shaped corresponding to the optical functionality to be achieved by the optical device, e.g., splitting portions of beams, deflecting portions of beams, intersecting portions of beams.

At least a first inlet surface of a first rod lens, e.g. a rod lens of a first rod lens, may be inclined by a predetermined angle α and a second inlet surface of a second rod lens, e.g. a rod lens of a second row, may be inclined by a predetermined angle α, wherein at least the first inlet surface or the second inlet surface may be curved.

In various embodiments, at least an outlet surface may be inclined and/or curved.

At least an inlet surface of a rod lens may be inclined by an angle α to a plane, which may be orthogonal to a longitudinal centerline of the rod lens and the inlet surface may be curved convexly, e.g., arched to the outside.

In various embodiments, at least an inlet surface of a rod lens may be inclined by an angle α to a plane, which may be orthogonal to a longitudinal centerline of the rod lens and the inlet surface may be curved concavely, e.g., arched to the inside, such that the surface is shaped for optimal imaging without gap and constant sensitivity, e.g., for a 254 micrometer scanning step.

The correction prism may be configured to be arranged adjacent to the rows of rod lenses and configured to cover at least two adjacent rod lenses of different rows in the transport direction, respectively, and/or the correction prism may be arranged between the rod lenses and the object plane.

The correction prism may be in contact with the rod lenses.

At least an inlet surface and/or an outlet surface of the rod lenses may be configured to refract the light beam such that a first portion of the light beam and a second portion of the light beam may intersect before or at inciding at the object plane.

In various embodiments, an inlet surface or an outlet surface of each rod lens of the two rows may be inclined by a predetermined angle α with regard to a plane P, which may be orthogonal to a longitudinal axis of each rod lens.

A height of a first lateral surface of the rod lens of the first row and a height of a first lateral surface of the rod lens of the second row may be equal, wherein a height of a second lateral surface of the rod lens of the first row and a height of a second lateral surface of the rod lens of the second row may be equal, wherein the two first lateral surfaces may be arranged closer to each other than the two second lateral surfaces, e.g., when viewed from a side view of the rod lenses in a direction transverse to the transport direction, and wherein the heights of the two first lateral surfaces may be greater than the heights of the two second lateral surfaces, or wherein the heights of the two second lateral surfaces may be greater than the heights of the two first lateral surfaces, e.g., when viewed from a side view of the rod lenses in a direction transverse to the transport direction.

In various embodiments, the inlet surface may be orientated towards the object plane.

In various embodiments, the inlet surface may be orientated towards the image plane.

The inlet surface(s) and/or the outlet surface(s) may be curved.

The inlet surface(s) of a rod lens may be curved convexly.

The outlet surface(s) of a rod lens may be curved convexly.

The inlet surface(s) of a rod lens may be curved concavely.

The outlet surface(s) of a rod lens may be curved concavely.

The predetermined angle α may be a value of 2.6 degrees. For example, the angle α may be between a horizontal line and/or a transport direction and/or a plane orthogonal to a longitudinal centerline of a rod lens and an inlet surface of a rod lens.

A length of the correction lens in the direction transverse to the transport direction may be of a value of about 240 mm (millimeter), e.g. 240 mm. A width of the correction lens in the transport direction may be of a value in a range of about 3.0 mm to 3.8 mm, e.g. of a value of about 3.4 mm, e.g. 3.4 mm. A height of the correction lens may be of a value of about 1.0 mm, e.g., 1.0 mm. A radius of the correction lens may be of a value in a range of about 1.0 mm to 2.0 mm, e.g. of a value of about 1.5 mm, e.g., 1.5 mm.

The device may include a scanning step in the transport direction on the object plane of a value of about 63,5 µm instead of 254 µm.

A material of the correction lens may be H-FK71 glass with a refraction index *n* = 1.4565 and an Abbe number *V_{d}*= 90.27.

A material of the correction lens may be PMMA polymer with a refraction index *n* = 1.4813 and an Abbe number *V_{d}*= 53.18.

In various embodiments, the light-sensitive line-pixel array may be configured as a plurality of one dimensional line-pixel arrays.

In various embodiments, the line-pixel arrays may be configured to extend in a direction transverse to the transport direction of the object and may be configured to be arranged parallelly and adjacently.

In various embodiments, a size of a pixel of the line-pixel array in the transport direction may be of a value in a range of about 90 µm to 100 µm, e.g. of a value of about 95.77 µm, e.g., 95.77 µm.

In various embodiments, a size of a pixel of the pixel array in a direction transverse to the transport direction may be of a value in a range of about 120 µm to 130 µm, e.g. of a value of about 126.96 µm, e.g., 126.96 µm.

In various embodiments, the row of rod lenses may include a length in a direction transverse to the transport direction of a value of about 240 mm, e.g., 240 mm. A width in transport direction of the row of rod lenses may be of a value of about 1.3 mm, e.g., 1.3 mm. A height of the row of rod lenses may be of a value of about 4.4 mm, e.g., 4.4 mm.

A diameter of the rod lenses may be a value in a range of 0.2 mm to 0.4 mm, e.g. of a value of 0.35 mm.

A distance from the inlet surface of the rod lenses to the object plane may be a value in a range of about 2.8 mm to 3.4 mm.

A distance from the inlet surface of the rod lenses to the image plane may be a value in a range of about 2.8 mm to 3.4 mm.

A portion between the rod lenses may be filled with a fill material, e.g., an adhesive agent.

The device may further include a housing, wherein a distance from the housing of the device to the object plane may be a value in a range of about 0.75 mm +/- 0.3 mm.

In various embodiments, a length of the housing in a direction transverse to the transport direction may be a value of about 28 mm, e.g., 28 mm.

In various embodiments, the light source may include a first light source and a second light source. The first and second light sources may be arranged symmetrically with regard to the rod lenses.

In various embodiments, the device may further include a third and a fourth light source.

In various embodiments, the rod lenses may include an acceptance angle with regard to a longitudinal center axis of the rod lenses of a value in a range of about 10 to 13 degrees, e.g. of a value of 11.6 degrees.

In various embodiments, the device may further include at least a light source for using the device in a transmission mode.

In various embodiments, the device may be an automated teller machine or part of an automated teller machine.

In various embodiments, the device may further include an Application Specific Integrated Circuit (ASIC) for digital output, for analog-digital-converting (ADC) and image processing etc.

In various embodiments, each described device may be combined with each other described device.

In various embodiments, a method for image recording may be provided. The method may include guiding at least an object in an object plane using a guiding device, transporting the object in the object plane in a transport direction using at least a driving device, illuminating the object using at least a light source of at least a contact image sensor, controlling the light source and/or a light-sensitive line-pixel array of the contact image sensor using the control device, determining a signal generated by the light-sensitive line-pixel array in an image plane using the control device, guiding a light beam emitted from the light source and partially reflected by the object via at least rod lenses to a light-sensitive line-pixel array using an optical device, wherein the optical device includes at least the rod lenses, and broadening by the optical device a sampled area in the transport direction of the object before the light beam incides at the light-sensitive line-pixel array.

Each feature of a device or method may be combined with each described feature of each other device or method.

In the drawings, like reference characters generally refer to the same parts throughout the different views. The use of the same reference numbers in different figures indicates similar or identical items or features. The drawings are not necessarily to scale, emphasis instead generally being placed upon illustrating the principles of the invention. In the following description, various embodiments of the invention are described with reference to the following drawings, in which:
FIGS. 1A and 1B show banknotes and a Moire-Effect;
FIG. 2 shows a device for image recording in a schematic view, in accordance with various embodiments;
FIG. 3 shows a portion of a device for image recording in a schematic view, in accordance with various embodiments;
FIG. 4 shows a correction lens in a schematic view, in accordance with various embodiments;
FIG. 5 show an arrangement of a plurality of exemplary rod lenses in a schematic view, in accordance with various embodiments;
FIG. 6 shows light beams and a plurality of exemplary rod lenses in schematic views, in accordance with various embodiments;
FIGS. 7A and 7B show a plurality of exemplary rod lenses in schematic views, in accordance with various embodiments;
FIG. 8 shows light beams and a plurality of rod lenses in schematic views, in accordance with various embodiments; and
FIGS. 9A and 9B show enlarged views of the light beams and rod lenses of FIG. 8 in schematic views; and
FIG. 10 shows a method for image recording, in accordance with various embodiments.

The skilled in the art will recognize that the embodiments and examples are not limited to the examples or drawings described. It should be understood that the drawings and detailed description thereto are not intended to limit examples to the particular form disclosed, but on the contrary, the intention is to cover all modifications, equivalents and alternatives falling within the spirit and scope as defined by the appended claims. As used throughout this application, the word "may" is used in a permissive sense (i.e., meaning having the potential to), rather than the mandatory sense (i.e., meaning must).

Further, each element of a list including a plurality of elements is also to be considered to be disclosed in combination with any further element of a further list.

The following detailed description refers to the accompanying drawings that show, by way of illustration, specific details and examples in which the invention may be practiced. These examples are described in sufficient detail to enable those skilled in the art to practice the invention. Other examples may be utilized and structural, logical, and electrical changes may be made without departing from the scope of the invention. The various examples are not necessarily mutually exclusive, as some examples can be combined with one or more other examples to form new examples. Various examples are described in connection with methods and various examples are described in connection with devices. However, it may be understood that examples described in connection with methods may similarly apply to the devices, and vice versa.

The terms "at least one" and "one or more" may be understood to include any integer number greater than or equal to one, i.e. one, two, three, four, [...], etc. The term "a plurality" may be understood to include any integer number greater than or equal to two, i.e. two, three, four, five, [...], etc.

The phrase "at least one of" with regard to a group of elements (for example at least one of A and B, or in the same way, at least one of A or B) may be used herein to mean at least one element from the group consisting of the elements, i.e. the logical and/or. For example, the phrase "at least one of" with regard to a group of elements may be used herein to mean a selection of: one of the listed elements, a plurality of one of the listed elements, a plurality of individual listed elements, or a plurality of a multiple of listed elements.

The term "coupled" is used herein to mean, for example, communicatively coupled, which may include type of a direct connection or an indirect connection. This may include any suitable wired connection and/or wireless connection.

A "processor" (or equivalently "processing circuitry" or "processing circuit") as used herein is understood as referring to any circuit that performs an operation(s) on signal(s), such as, for example, any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (for example a processor or microprocessor). As utilized herein, "digital processing circuit(ry)" may refer to a circuit implemented using digital logic that performs processing on a signal, for example, an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

A "sensor" as used herein is understood as referring to any kind of device, module, or subsystem whose purpose may be to transpose a sensed variable to a signal of different variable, typically to electrical current or voltage.

A "housing" as used herein is understood as referring to any kind of object, which allows carrying or accommodating other components.

A "rod lens" as used herein is understood as a lens, e.g., a cylindrical lens, having a geometrical form of a cylinder. A rod lens may be used for beam collimation, focusing and imaging. A "rod lens array" as used herein is understood as an arrangement of a plurality of rod lenses, which may be arranged in at least a row of a plurality of rod lenses.

FIGS. 1A and 1B show exemplary banknotes and a Moire-Effect.

In FIGS. 1A and 1B arrows illustratively show the so-called Moire effect, which may appear in banknote camera images, and which may be caused by under-sampling. Moire patterns may appear in areas on bank notes, where a periodical pattern, e.g., lines, is printed on a banknote or the like. Moire patterns' structure depend on a banknote angle. The banknote illustrated in FIG. 1A has a different angle from the banknote illustrated in FIG. 1B. Since banknotes are transported upon randomly distributed angles, the banknote camera images may be irreproducible. Emergence of Moire pattern in the banknote images may cause inadequate performance of algorithms, which are used for banknote recognition, authentication, and sorting. Imaging through rod lenses, may be in a ration of 1:1. Photo-sensitive CMOS active pixel sensors may have a size of 100 µm in the banknote-transport direction, while scanning step per image line may be 254 µm. This discrepancy may cause a known effect in digital imaging technology, the so-called under-sampling. Moire effects are a direct consequence of the under-sampling and existence of periodical line patterns.

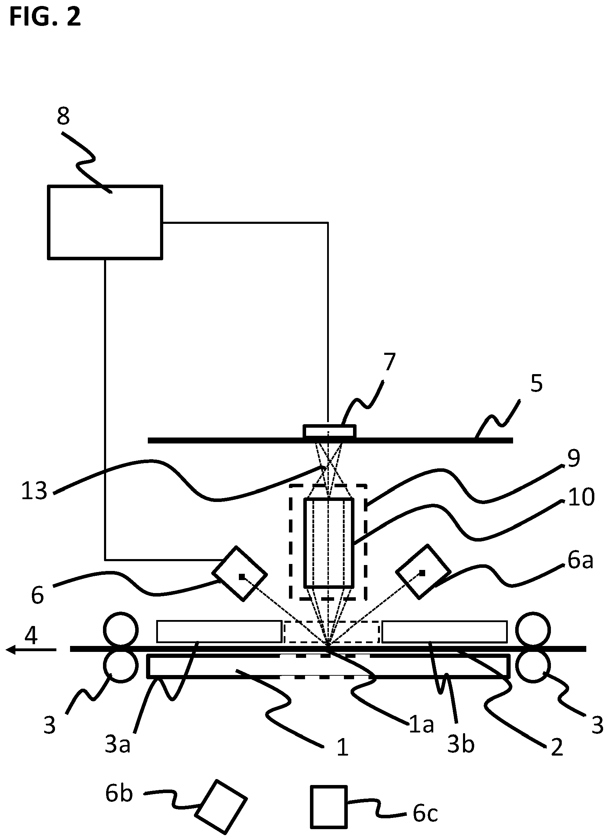

FIG. 2 shows a device for image recording in a schematic view, in accordance with various embodiments.

The device may include a guiding device 1, which guides at least an object 2 in an object plane 1a. The device may further include at least a driving device 3, which is configured to transport the object 2 in the object plane 1a in a transport direction 4. The device may further include additional guiding devices 3a and 3b. The guiding devices 1, 3a, 3b may be transparent. The device may further include an image plane 5 and at least a contact image sensor (CIS), which includes at least a light source 6 for illuminating of the object 2 and at least a light-sensitive line-pixel array 7. The light-sensitive line-pixel array 7 is arranged in a direction transverse to the transport direction 4 and is arranged in the image plane 5. The device may further include a control device 8, which is configured to control the at least one light source 6 and/or the light-sensitive line-pixel array 7 and which is configured to determine a signal generated by the light-sensitive line-pixel array 7. The device may further include an optical device 9 arranged between the object plane 1a and the image plane 5. The optical device 9 includes at least a plurality of rod lenses 10. The rod lenses 10 are arranged in at least one row in the direction transverse to the transport direction 4 of the object 2. The optical device 9 is configured to guide a light beam 13 emitted from the light source 6 and partially reflected by the object 2 via at least the rod lenses 10 to the light-sensitive line-pixel array 7. The optical device 9 is configured to broaden a sampled area in the transport direction 4 before the light beam incides at or reaches or arrives at the light-sensitive line-pixel array 7, as schematically illustrated in FIG. 2. The device may be used in an incident light method. The device may further include at least a light source 6a, 6b, 6c for using the device in a transmitted light method. The device may have a scanning step in the transport direction 4 on the object plane 1a of a value of about 63,5 µm. The device may be an automated teller machine or may be part of an automated teller machine.

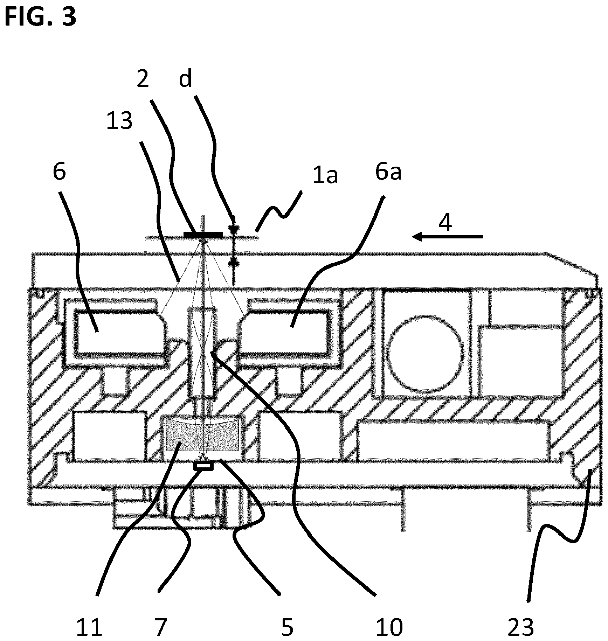

FIG. 3 shows a portion of a device for image recording in a schematic view, in accordance with various embodiments.

The light source 6 and/or the light source 6a emit a light beam 13, which impinges on an object 2 positioned on the object plane 1a. The object 2 may be transported in a transport direction 4, e.g., from a right side to a left side as schematically illustrated in FIG.3. The light beam 13 is partially reflected by the object 2 in the object plane 1a and reaches an inlet surface of at least a rod lens 10 of a plurality of rod lenses. The rod lenses 10 may be arranged in a row in a direction transverse, e.g., orthogonal, to the transport direction 4. The light beam passes through the rod lens 10 and reaches a lens, e.g., a correction lens 11. The light beam 13 passes through the correction lens 11 and the light beams 13 are deflected such that the light beam 13 is broadened before the light beam 13 incides at or reaches at the image plane 5 and/or the light-sensitive line-pixel array 7. In other words, the at least one correction lens 11 deflects part of the light beam 13 such that the light beam 13 is broadened in the transport direction 4 only. In other words, the light beam 13 may not be deflected in a direction transverse to the transport direction 4. The device may further include a housing 23 for covering and protecting the components of the device from outside. The correction lens 11 may be arranged in the device such, that a curved portion or surface or inlet surface or outlet surface of the correction lens 11 may be directed to the object plane 1a. The correction lens 11 may be arranged between the plurality of rod lens 11 and the image plane 5 and/or the line pixel sensor array 7. A distance d between the object plane 1a and a distal portion of a housing 23 may be a value in a range of about 0.75 mm ±0.3 mm. The correction lens 11 may be adjacent to the at least one rod lens 10 or the plurality of rod lenses 11. The correction lens 11 and the rows of rod lenses 14a and 14b may be aligned parallelly and in a direction transverse to the transport direction 4.

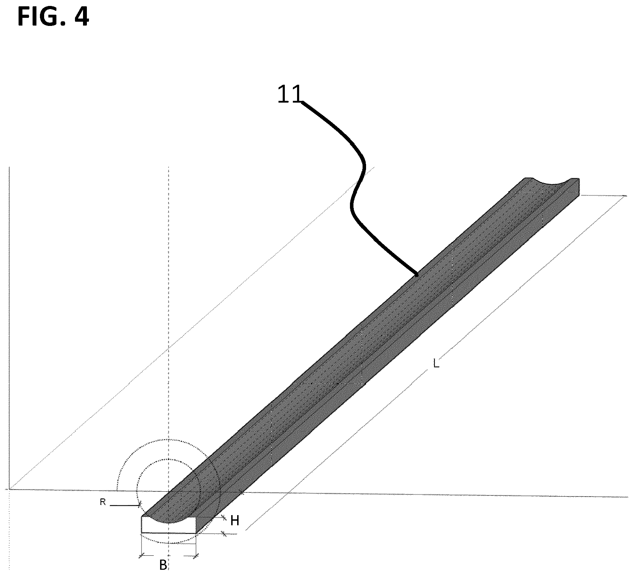

FIG. 4 shows a correction lens in a schematic view, in accordance with various embodiments.

The exemplary correction lens 11 illustrated in the schematic view in FIG. 4 covers the entire length of pixel sensor array 7. The correction lens 11 broadens the light beams 13 or rays in the transport direction 4 only. The lens 11 broadens the light beam and a sampling area in the transport direction 4 on the object plane 1a. The correction lens 11 is a cylindrical diverging lens. A length L of the lens 11 in the direction transverse to the transport direction 4 is of a value of about 240 mm. A width B of the correction lens 11 in the transport direction 4 is of a value in a range of about 3.0 mm to 3.8 mm, e.g. of a value of about 3.4 mm. A height H of the correction lens 11 is of a value of about 1.0 mm. A radius R of the correction lens 11 is of a value in a range of about 1.0 mm to 2.0 mm, e.g. of a value of about 1.5 mm. A material of the correction lens 11 is H-FK71 is glass with a refraction index n=1.4565 and an Abbe number Vd=90.27 or PMMA polymer with a refraction index n=1.4813 and an Abbe number Vd=53.18. The correction lens 11 explained with regard to FIG. 4 may be used in the devices explained in FIGS. 2 and 3.

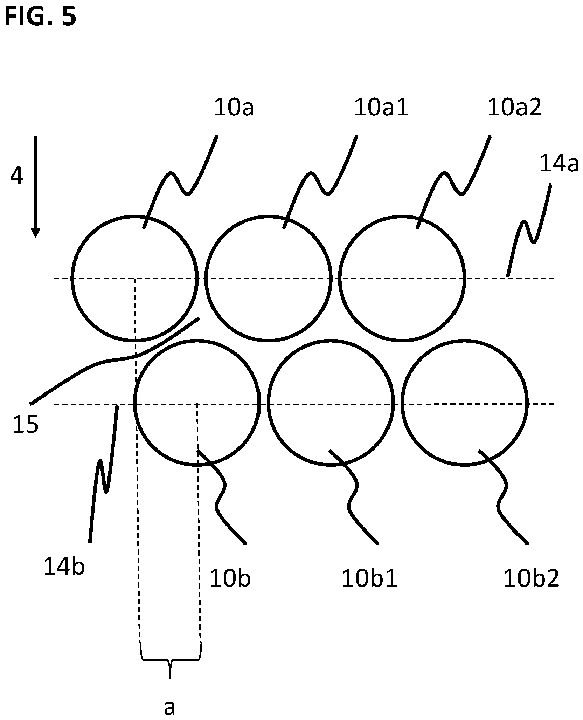

FIG. 5 show an arrangement of a plurality of exemplary rod lenses in a schematic view, in accordance with various embodiments.

FIG. 5 shows a rod lens 10a, a second rod lens 10a1 and a third rod lens 10a2. The rod lens 10a, 10a1, 10a2 are arranged in a first row 14a. A rod lens 10b, a second rod lens 10b1 and a third rod lens 10b2 are arranged in a second row 14b. The rows 14a, 14b are aligned adjacently and parallelly, e.g., in a closest packing configuration or in a hexagonal honeycomb lattice pattern. The rows 14a, 14b are displaced by a predetermined distance a in a direction transverse the transport direction 4, e.g., by a value in a range of about 170 µm to 200 µm, e.g. of a value of about 180 µm. An area or portion 15 between the rod lenses 10a, 10a1, 10a2, 10b, 10b1, 10b2 may be filled with an adhesive fill material. It is clear, that there may be more rod lenses than schematically illustrated in FIG. 5. The arrangement of rod lenses 10a, 10a1, 10a2, 10b, 10b1, 10b2 described with regard to FIG. 5 may be used in combination with the devices explained with regard to FIGS. 1 to 4.

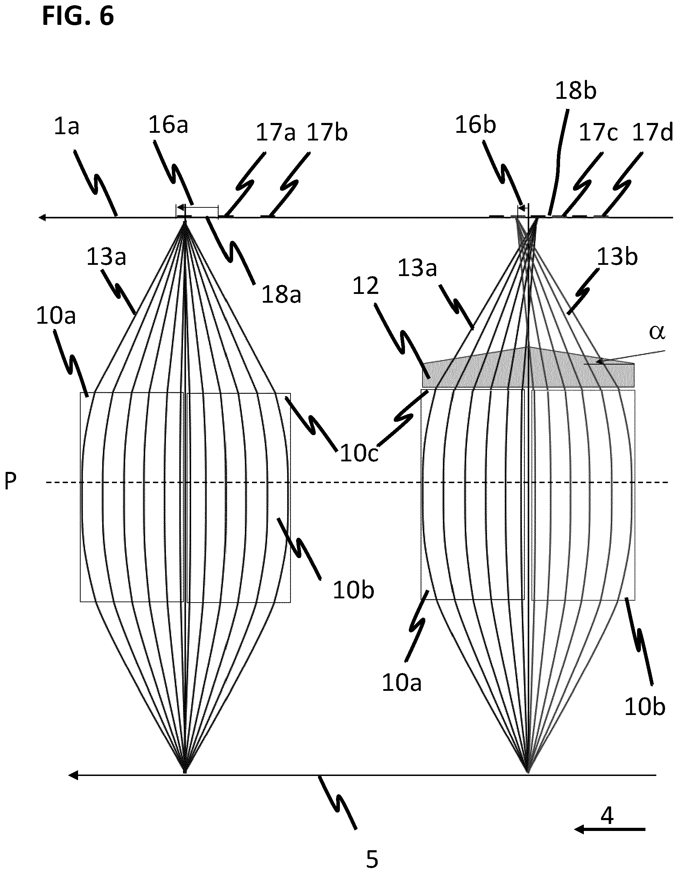

FIG. 6 shows light beams 13 and a plurality of exemplary rod lenses 10a, 10a1, 10a2, 10b, 10b1, 10b2 in schematic views, in accordance with various embodiments.

A first rod lens 10a and a second rod lens 10b are arranged between the object plane 1a and the image plane 5. An object, e.g., a banknote, is transported on the object plane 1a in the transport direction 4 and is scanned. The first rod lens 10a and the second rod lens 10b include a surface, e.g., an inlet surface 10c, respectively. FIG. 6 shows the way of light beams 13a and 13b. On the left side of FIG. 6 it is illustratively shown that a scanning step 16a is divided in a first portion, in which a scanning takes place, e.g., 17a, 17b, and a second portion 18a of a scanning gap in case no correction device is used. Imaging through the rod lenses 10a, 10b on the left side, may be a ration of 1:1. Photo-sensitive CMOS active pixel sensors have a size of 100 µm in the banknote-transport direction 4, while scanning step per image line is 254 µm. This discrepancy causes a known effect in digital imaging technology, the so-called under-sampling. Moire effects are a direct consequence of the under-sampling and existence of periodical line patterns (for example intaglio) on the banknotes. The scanning gap 18a may be a value of about 40 % of the scanning step 16a.

On the right side of FIG. 6 a prism, also referred to as correction prism 12, is used to broaden the light beam or rays 13a, 13b and a sampling area in a direction, which corresponds to the transport direction 4 of an object. The correction prism 12 includes an inlet surface. The inlet surface has an angle α of 2.6 degrees to a plane P, which is orthogonal to a longitudinal centerline of the correction prism 12 and/or to each longitudinal centerline of each rod lens 10a, 10b. As can be seen on the right side of FIG. 6, the rays 13a, 13b from the object plane 1a reach an inlet surface of the correction prism 12 and are deflected. The rays 13a, 13b are deflected at an inlet surface and/or an outlet surface of the correction prism 12. After passing through the correction prism 12 the rays 13a, 13b enter the rod lenses 10a and 10b at an inlet surface 10c of the rod lenses 10a and 10b and are deflected. After passing through the rod lenses 10a, 10b and deflecting at an outlet surface of the rod lenses, the rays 13a, 13b meet at the image plane 5, as illustrated in FIG. 6. The correction prism 12 covers the entire length of the pixel sensor array 7 and broadens the rays 13a, 13b in transport direction 4 only. The sampling step 16b may be reduced. A sampling gap 18b, in other words, an area or portion, where no sampling takes place, may be reduced between sampling areas or portions 17c, 17d. As a result, a modification of the 1:1 ratio imaging through the rod lenses 10a, 10b may be provided via implementation of a correction prism. Further, an under-sampling may be reduced. Further, a Moire effect may be reduced.

The devices exemplary explained with regard to FIG. 6 may be implemented in the devices explained with regard to FIG. 2 to 5.

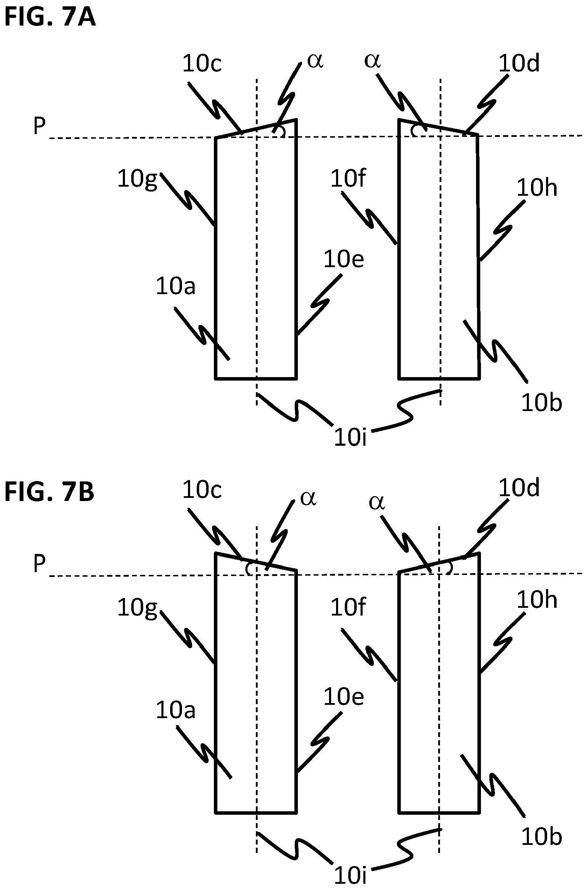

FIGS. 7A and 7B show a plurality of exemplary rod lenses 10a, 10b in schematic views, in accordance with various embodiments.

FIG. 7A show examples of embodiments of a first rod lens 10a and a second rod lens 10b. For example, the rod lens 10a may be arranged in a row 14a as schematically illustrated in FIG. 5 and the rod lens 10b may be arranged in a row 14b as schematically illustrated in FIG. 5. The rod lens 10a and 10b are adjacent and parallel, e.g., in a closest packing configuration or in a hexagonal honeycomb lattice pattern, in the transport direction 4. The first rod lens 10a includes an inlet surface 10c and a first lateral surface 10e and a second lateral surface 10g. The second rod lens 10b includes an inlet surface 10d and a first lateral surface 10f and a second lateral surface 10h. The first rod lens 10a and the second rod lens 10b include a centerline 10i, respectively.

According to various embodiments, the first inlet surface 10c and the second inlet surface 10d may be inclined by an angle α of about 2.6 degrees to a plane P, which is orthogonal to a longitudinal centerline 10i of each rod lens 10i. According to various embodiments, the first lateral surface 10e of the first rod lens 10a and the first later surface 10f of the second rod lens 10b are longer in comparison to the second lateral surface 10g of the first rod lens 10a and the second lateral surface 10h of the second latera surface 10h. The inclination or angle α of the inlet surfaces 10c and 10d may have a value of 2.6 degrees.

According to various embodiments, the first inlet surface 10c and the second inlet surface 10d may be inclined to a plane P, which is orthogonal to an outlet surface of a rod lens 10a and 10b.

According to various embodiments, the first lateral surface 10e of the first rod lens 10a and the first later surface 10f of the second rod lens 10b are longer in comparison to the second lateral surface 10g of the first rod lens 10a and the second lateral surface 10h of the second lateral surface 10h. The inclination or angle α of the inlet surfaces 10c and 10d to the plane P may have a value of 2.6 degrees as schematically illustrated in FIG. 7A.

According to various embodiments, the second lateral surface 10g of the first rod lens 10a and the second later surface 10h of the second rod lens 10b are longer in comparison to the first lateral surface 10e of the first rod lens 10a and the first lateral surface 10f of the second rod lens 10b. The inclination or angle α of the inlet surfaces 10c and 10d to the plane P may have a value of about 2.6 degrees as schematically illustrated in FIG. 7B.

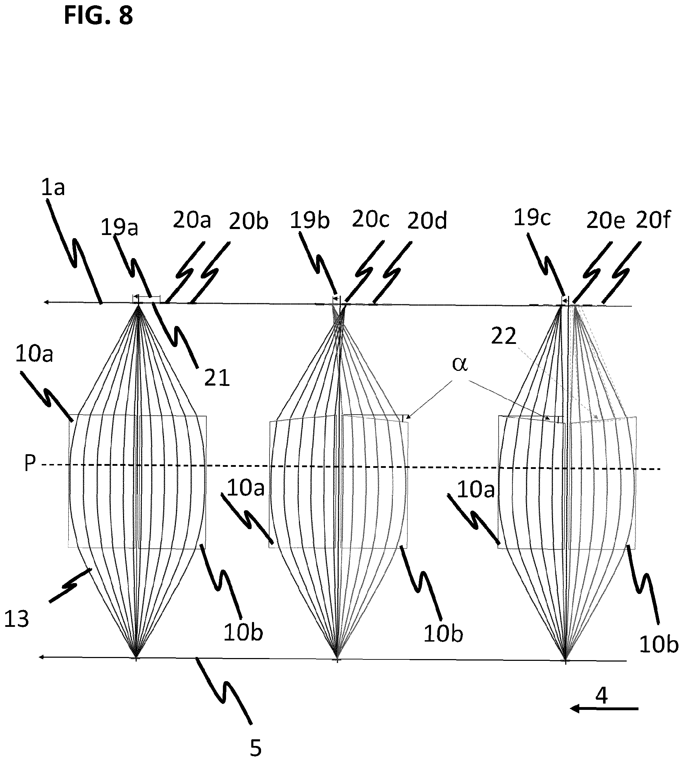

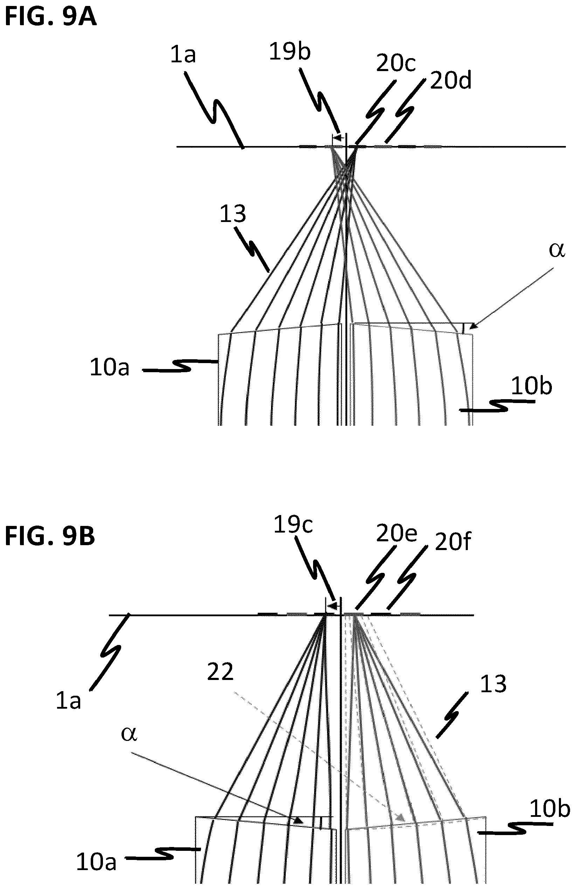

FIGS. 8 shows light beams 13 and a plurality of rod lenses 1a, 10b in schematic views, in accordance with various embodiments. FIGS. 9A and 9B show enlarged views of the light beams 13 and rod lenses 10a, 10b of FIG. 8 in schematic views.

The rod lenses 10a and 10b are arranged between the object plane 1a and the image plane 5. On the left side of FIG. 8 commonly known rod lenses are used. In a scanning step 19a only the portion 20a, 20b is scanned. A scanning gap 21, in which no information of the object is achieved, is big in relation to the scanning step 19a. Only a small scanning area 20a, 20b is illustratively shown.

In the middle position in FIG. 8 the rod lenses 10a and 10b have a shape as described in view of FIG. 7A. The inlet surfaces of the rod lenses 10a and 10b are inclined by angle α of about 2.6 degrees with regard to a plane P, which is orthogonal to a longitudinal centerline of each rod lens 10a, 10b. As can be seen in the embodiment in the middle position in FIG. 8 the scanning step 19b is smaller than in the case 19a on the left side of FIG. 8. Further, a scanning area 20c, 20d is larger and a scanning gap 21 is smaller than in the case on the left side of FIG. 8.

The right side of FIG. 8 shows rod lenses 10a and 10b according to further embodiments. The rod lenses 10a and 10b have a shape as described in FIG. 7B, however, the inlet surfaces of the rod lenses 10a and 10b are additionally shaped convex, as illustrated by reference sign 22, and the scanning gap 21 may ever become smaller.

In various embodiments, the inlet surfaces 10c and 10d may have an angle α of about 2.6 degrees to the plane P and further the inlet surfaces 10c and 10d may be curved as illustratively shown by the reference sign 22 on the right side of FIG. 8. The scanning step 19c is small and a scanning gap between scanning areas 203, 20f may be reduced. According to various embodiments, the inlet surfaces 10c and 10d may be curved such that the inlet surfaces 10c and 10d are convexly shaped. According to various embodiments, the inlet surfaces 10c and 10d may be curved such that the inlet surfaces 10c and 10d are shaped concavely.

According to various embodiments, outlet surfaces of rod lenses 10a, 10b may be inclined by an angle α of about 2.6 degrees to the plane P.

According to various embodiments, outlet surfaces of rod lenses 10a, 10b may additionally be curved convexly or concavely, as can be seen, e.g., at reference sign 22 on the right side of FIG. 9B.

According to various embodiments, the curved inlet surface 22 may be arranged between the body of the rod lens 10 and the object plane 1a.

According to various embodiments, the curved inlet surface 22 may be arranged between the body of the rod lens 10 and the image plane 5.

According to various embodiments, at least an inlet surface 10c or 10d of a rod lens 10 may additionally be curved convexly and at least an inlet surface of a rod lens may additionally be curved concavely.

At least an outlet surface of a rod lens may additionally be curved convexly and at least an outlet surface of a rod lens may additionally be curved concavely.

A scanning gap in a scanning step may be minimized and an under sampling and a Moire effect may be reduced.

The devices and features described with regard to FIG. 8 may be combined with devices and features described with reference to FIGS. 2 to 7.

The devices and features described with regard to FIGS. 9A and 9B may be combined with devices and features described with reference to FIGS. 2 to 8.

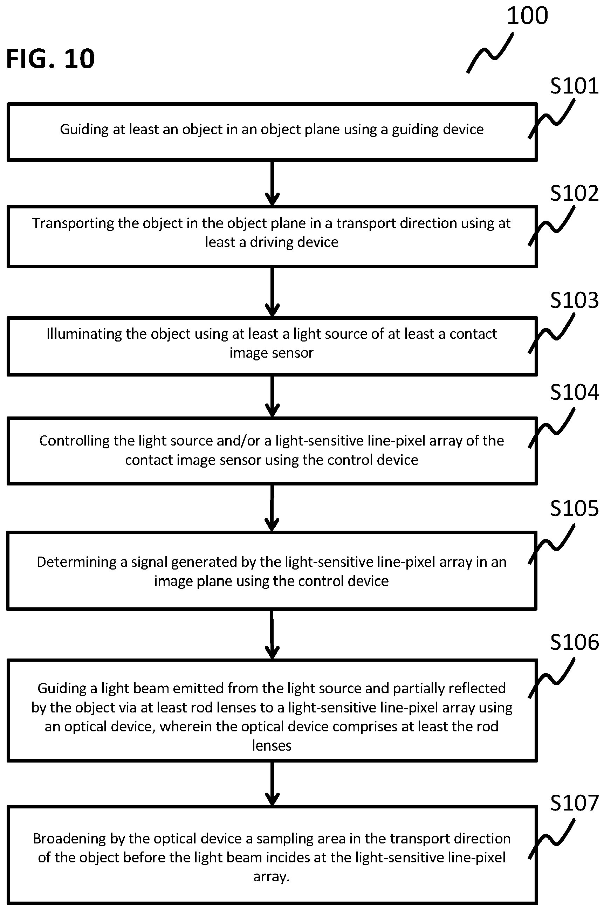

FIG. 10 illustratively shows a flow chart 100 of a method for image recording in accordance with various embodiments. The method may include guiding at least an object in an object plane using a guiding device S101, transporting the object in the object plane in a transport direction using at least a driving device S102, illuminating the object using at least a light source of at least a contact image sensor S103, controlling the light source and/or a light-sensitive line-pixel array of the contact image sensor using the control device S104, determining a signal generated by the light-sensitive line-pixel array in an image plane using the control device S105, guiding a light beam emitted from the light source and partially reflected by the object via at least rod lenses to a light-sensitive line-pixel array using an optical device, wherein the optical device includes at least the rod lenses, S106 and broadening by the optical device a sampling area in the transport direction of the object before the light beam reaches the light-sensitive line-pixel array S107.

According to various embodiments, the method may further include that the optical device further includes a correction lens as described herein.

According to various embodiments, the method may further include that the optical device further includes a correction prism as described herein.

According to various embodiments, the broadening the light beam in the transport direction of the object before the light beam reaches the light-sensitive line-pixel array includes broadening by at least a correction lens.

According to various embodiments, the broadening the light beam in the transport direction of the object before the light beam reaches at the light-sensitive line-pixel array includes broadening by at least a correction prism.

According to various embodiments, the broadening the light beam in the transport direction of the object before the light beam incides at the light-sensitive line-pixel array may include broadening by at least a refractive index of an inlet surface or an outlet surface of at least a rod lens.

According to various embodiments, the broadening may include broadening the light beam by a value of about 2.6 degrees to a plane, which is orthogonal to a centerline of at least a rod lens.

According to various embodiments, the broadening may include that the ray(s) and/or the light beam(s) is/are divergent and the rate of "broadening" is changed via a lens. In case of a divergent light a broadening may happen automatically. In other words, the broadening may include a dispersing or defocusing or diverging.

According to various embodiments, the method may further include that the optical device further includes a correction prism as described herein.

According to various embodiments, the method may further include that at least an inlet surface of at least a rod lens is configured as described herein.

The features mentioned above in conjunction with exemplary or specific examples may also be applied to further examples mentioned above and vice versa. Further, effects mentioned in relation to the device also refer to the method and vice versa.

In the following, various examples are provided with reference to the Figures and embodiments described above.

Example 1 is a device for image recording, including: a guiding device configured to guide at least an object in an object plane, at least a driving device configured to transport the object in the object plane in a transport direction, an image plane, at least a contact image sensor including at least a light source for illuminating of the object, at least a light-sensitive line-pixel array. The light-sensitive line-pixel array is arranged in a direction transverse to the transport direction and is arranged in the image plane. The device further includes a control device configured to control the light source and/or the light-sensitive line-pixel array and configured to determine a signal generated by the light-sensitive line-pixel array. The device further includes an optical device arranged between the object plane and the image plane. The optical device includes at least a plurality of rod lenses. The rod lenses are arranged in at least one row in the direction transverse to the transport direction of the object. The optical device is configured to guide a light beam emitted from the light source and partially reflected by the object via at least the rod lenses to the light-sensitive line-pixel array and configured to broaden a sampling area in the transport direction before the light beam incides at the light-sensitive line-pixel array.

In Example 2, the device of Example 1 may optionally include that the rows are arranged adjacently and parallelly, wherein a first row is displaced from a second row in the direction transverse to the transport direction by a predetermined distance, and/or an area between the rows is filled by an adhesive fill material. The device may be arranged in a closest packing configuration or in a hexagonal honeycomb lattice pattern.

In Example 3, the device of Example 1 or 2 may optionally include that the optical device is configured to guide the light beam and to overlap at least a first portion of the light beam and a second portion of the light beam, and/or the optical device is configured to reduce a scanning step in the object plane by a value of 1/4.

In Example 4, the optical device of Example 1 to 3 may optionally include at least a correction lens configured to broaden the light beam and a sampling area in the transport direction on the object plane, and/or wherein the correction lens is a cylindrical diverging lens and/or a plano concave cylindrical lens.

In Example 5, the device of Example 1 to 4 may optionally include that the correction lens is configured to cover the at least one row of the rod lenses and/or the light-sensitive line-pixel array in the direction transverse to the transport direction.

In Example 6, the device of Example 1 to 5 may optionally include that the correction lens is arranged between the rod lenses and the line-pixel array and/or the image plane.

In Example 7, the device of Example 1 to 4 may optionally include that the optical device includes at least a correction prism configured to split the light beam in the transport direction and to broaden a sampling area in the transport direction of the object on the object plane.

In Example 8, the device of Example 7 may optionally include that the correction prism is a triangular prism and/or at least an inlet surface of the correction prism is inclined in relation to an outlet surface of a base area of the correction prism by a predetermined angle α.

In Example 9, the device of Example 7 or 8 may optionally include that the correction prism is configured to be arranged adjacent to the rows of rod lenses and configured to cover at least two adjacent rod lenses of different rows in the transport direction, respectively, and/or wherein the correction prism is arranged between the rod lenses and the object plane.

In Example 10, the device of Example 1 to 9 may optionally include that at least an inlet surface of the rod lenses is configured to refract the light beam such that a first portion of the light beam and a second portion of the light beam intersect at reaching the object plane.

In Example 11, the device of Example 2 to 9 may optionally include that an inlet surface of each rod lens of the two rows is inclined by a predetermined angle α with regard to a plane, which is orthogonal to a longitudinal axis of each rod lens.

In Example 12, the device of Example 11 may optionally include that a height of a first lateral surface of the rod lens of the first row and a height of a first lateral surface of the rod lens of the second row are equal. A height of a second lateral surface of the rod lens of the first row and a height of a second lateral surface of the rod lens of the second row are equal. The two first lateral surfaces are arranged closer to each other than the two second lateral surfaces. The heights of the two first lateral surfaces are greater than the heights of the two second lateral surfaces, or the heights of the two second lateral surfaces are greater than the heights of the two first lateral surfaces.

In Example 13, the device of Example 10 to 12 may optionally include that the inlet surface is orientated towards the object plane. The inlet surface (10c, 10d) may optionally be curved.

In Example 14, the device of Example 8 or 11 may optionally include that the predetermined angle α is a value of 2.6 degrees.

Example 15 provides a method for image recording, the method including: Guiding at least an object in an object plane using a guiding device, transporting the object in the object plane in a transport direction using at least a driving device, illuminating the object using at least a light source of at least a contact image sensor, controlling the light source and/or a light-sensitive line-pixel array of the contact image sensor using the control device, determining a signal generated by the light-sensitive line-pixel array in an image plane using the control device, guiding a light beam emitted from the light source and partially reflected by the object via at least rod lenses to a light-sensitive line-pixel array using an optical device, wherein the optical device includes at least the rod lenses, and broadening by the optical device a sampling area in the transport direction of the object before the light beam incides at the light-sensitive line-pixel array.

Example 16 provides a device according to anyone of claims 1 to 14, wherein a length of the correction lens in the direction transverse to the transport direction is of a value of about 240 mm. A width of the correction lens 11 in the transport direction 4 is of a value in a range of about 3.0 mm to 3.8 mm, e.g. of a value of about 3.4 mm. A height of the correction lens 11 is of a value of about 1.0 mm. A radius of the correction lens 11 is of a value in a range of about 1.0 mm to 2.0 mm, e.g. of a value of about 1.5 mm.

In Example 17, the device of Example 1 or 114 may optionally include a scanning step in the transport direction on the object plane of a value of about 63.5 µm.

In Example 18, the device of Example 1 or 14 may optionally include 18 that a material of the correction lens is H-FK71 glass with a refraction index *n* = 1.4565 and an Abbe number *V_{d}*= 90.27, or PMMA polymer with a refraction index *n*= 1.4813 and an Abbe number *V_{d}*= 53.18.

In Example 19, the device of Example 1 or 14 may optionally include that the light-sensitive line-pixel array is configured as a plurality of one dimensional line-pixel arrays. The line-pixel arrays may be configured to extend in a direction transverse to the transport direction of the object and are configured to be arranged parallelly and adjacently.

In Example 20, the device of Example 1 or 14 may optionally include that a size of a pixel of the line-pixel array in the transport direction is of a value in a range of about 90 µm to 100 µm, e.g. of a value of about 95.77 µm, and wherein a size of a pixel of the pixel array in a direction transverse to the transport direction is of a value in a range of about 120 µm to 130 µm, e.g. of a value of about 126.96 µm.

In Example 21, the device of Example 1 or 14 may optionally include that the row of rod lenses includes a length in a direction transverse to the transport direction of a value of about 240 mm, a width in transport direction is of a value of about 1.3 mm, and a height is of a value of about 4.4 mm.

In Example 22, the device of Example 1 or 14 may optionally include that a diameter of the rod lenses is a value in a range of 0.2 mm to 0.4 mm, e.g. of a value of 0.35 mm.

In Example 23, the device of Example 1 or 14 may optionally include that a distance from the inlet surface of the rod lenses to the object plane is a value in a range of about 2.8 mm to 3.4 mm.

In Example 24, the device of Example 1 or 14 may optionally include that a distance from the inlet surface of the rod lenses to the image plane is a value in a range of about 2.8 mm to 3.4 mm.

In Example 25, the device of Example 1 or 14 may optionally include that a portion between the rod lenses is filled by adhesive agent.

In Example 26, the device of Example 1 or 14 may optionally include that the device further includes a housing, wherein a distance from the housing of the device to the object plane is a value in a range of about 0.75 mm ± 0.3 mm.

In Example 27, the device of Example 1 or 14 may optionally include that a length of the housing in a direction transverse to the transport direction is a value of about 28 mm.

In Example 28, the device of Example 1 or 14 may optionally include that the light source includes a first light source and a second light source, wherein the first and second light sources are arranged symmetrically with regard to the rod lenses.

In Example 29, the device of Example 1 or 14 may optionally include hat the rod lenses include an acceptance angle with regard to a longitudinal middle axis of the rod lenses of a value in a range of about 10 to 13 degrees, e.g. of a value of 11.6 degrees.

In Example 30, the device of Example 1 or 14 may optionally include that the device further includes a light source for using the device in a transmission mode.

In Example 31, the device of Example 1 or 14 may optionally include that the device is an automated teller machine used, e.g., in a high-speed banknote processing machine.

While the invention has been particularly shown and described with reference to specific examples, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. Device for image recording, the device comprising:
a guiding device (1) configured to guide at least an object (2) in an object plane (1a);
at least a driving device (3) configured to transport the object (2) in the object plane (1a) in a transport direction (4);
an image plane (5);
at least a contact image sensor comprising at least a light source (6) for illuminating of the object (2),
at least a light-sensitive line-pixel array (7), wherein the light-sensitive line-pixel array (7) is arranged in a direction transverse to the transport direction (4) and is arranged in the image plane (5),
a control device (8) configured to control the light source (6) and/or the light-sensitive line-pixel array (7) and configured to determine a signal generated by the light-sensitive line-pixel array (7), and
an optical device (9) arranged between the object plane (1a) and the image plane (5),
wherein the optical device (9) comprises at least a plurality of rod lenses (10), wherein the rod lenses (10) are arranged in at least one row (14a, 14b) in the direction transverse to the transport direction (4) of the object (2), and
wherein the optical device (9) is configured to guide a light beam (13) emitted from the light source (6) and partially reflected by the object (2) via at least the rod lenses (10) to the light-sensitive line-pixel array (7) and configured to broaden a sampled area in the transport direction (4) before the light beam incides at the light-sensitive line-pixel array (7).

2. The device according to claim 1, wherein the rod lenses (10) are arranged in two rows, wherein the rows are arranged adjacently and parallelly,
wherein a first row of the two rows is displaced from a second row of the two rows in the direction transverse to the transport direction (4) by a predetermined distance, and/or
wherein an area between the rows is filled by an adhesive fill material.

3. The device according to claim 1 or 2, wherein the optical device (9) is configured to guide the light beam and to overlap at least a first portion of the light beam and a second portion of the light beam, and/or
wherein the optical device (9) is configured to reduce a scanning step (14) in the object plane (1a) by a value of 1/4.

4. The device according to anyone of the foregoing claims, wherein the optical device (9) comprises at least a correction lens (11) configured to broaden the light beam and a sampling area in the transport direction (4) on the object plane (1a), and/or
wherein the correction lens (11) is a cylindrical diverging lens and/or a plano concave cylindrical lens.

5. The device according to anyone of the foregoing claims, wherein the correction lens (11) is configured to cover the at least one row of the rod lenses (10) and/or the light-sensitive line-pixel array (7) in the direction transverse to the transport direction (4).

6. The device according to anyone of the foregoing claims, wherein the correction lens (11) is arranged between the rod lenses (10) and the line-pixel array (7) and/or the image plane (5).

7. The device according to anyone of claims 1 to 4, wherein the optical device (9) comprises at least a correction prism (12) configured to split the light beam in the transport direction (4) and to broaden a sampling area in the transport direction (4) of the object (2) on the object plane (1a).

8. The device according to claim 7, wherein the correction prism (12) is a triangular prism and/or at least an inlet surface (12a) of the correction prism (12) is inclined in relation to an outlet surface (12b) of a base area of the correction prism (12) by a predetermined angle (α).

9. The device according to claim 7 or 8, wherein the correction prism (12) is configured to be arranged adjacent to the rows of rod lenses (10) and configured to cover at least two adjacent rod lenses (10a, 10b) of different rows in the transport direction (4), respectively, and/or
wherein the correction prism (12) is arranged between the rod lenses (10) and the object plane (1a).

10. The device according to anyone of the foregoing claims, wherein at least an inlet surface (10c, 10d) of the rod lenses (10) is configured to refract the light beam such that a first portion of the light beam and a second portion of the light beam intersect at inciding at the object plane (1a).

11. The device according to anyone of claims 2 to 9, wherein an inlet surface (10c, 10d) of each rod lens (10a, 10b) of the two rows is inclined by a predetermined angle (α) with regard to a plane (P), which is orthogonal to a longitudinal axis (L) of each rod lens (10a, 10b).

12. The device according to claim 11, wherein a height of a first lateral surface (10e) of the rod lens (10a) of the first row and a height of a first lateral surface (10f) of the rod lens (10b) of the second row are equal,
wherein a height of a second lateral surface (10g) of the rod lens (10a) of the first row and a height of a second lateral surface (10h) of the rod lens (10b) of the second row are equal,
wherein the two first lateral surfaces (10e, 10f) are arranged closer to each other than the two second lateral surfaces (10g, 10h), and
wherein the heights of the two first lateral surfaces (10e, 10f) are greater than the heights of the two second lateral surfaces (10g, 10h), or
wherein the heights of the two second lateral surfaces (10g, 10h) are greater than the heights of the two first lateral surfaces (10e, 10f).

13. The device according to anyone of claims 10 to 12, wherein the inlet surface (10c, 10d) is orientated towards the object plane (1a) and/or wherein the inlet surface (10c, 10d) is curved.

14. The device according to claim 8 or 11, wherein the predetermined angle (α) is a value of 2.6 degrees.

15. A method for image recording, the method comprising:
Guiding at least an object (2) in an object plane (1a) using a guiding device (1),
Transporting the object (2) in the object plane (1a) in a transport direction (4) using at least a driving device (3),
Illuminating the object (2) using at least a light source (8) of at least a contact image sensor,
Controlling the light source (8) and/or a light-sensitive line-pixel array (7) of the contact image sensor using the control device (6),
Determining a signal generated by the light-sensitive line-pixel array (7) in an image plane (5) using the control device (6),
Guiding a light beam emitted from the light source (8) and partially reflected by the object (2) via at least rod lenses (10) to a light-sensitive line-pixel array (7) using an optical device (9), wherein the optical device (9) comprises at least the rod lenses (10), and
Broadening by the optical device (9) the light beam in the transport direction (4) of the object (2) before the light beam incides at the light-sensitive line-pixel array (7).

## Amended claims

### Amended claims in accordance with Rule 137(2) EPC.

1. Device for image recording, the device comprising:
a guiding device (1) configured to guide at least an object (2) in an object plane (1a);
at least a driving device (3) configured to transport the object (2) in the object plane (1a) in a transport direction (4);
an image plane (5);
at least a contact image sensor comprising at least a light source (6) for illuminating of the object (2),
at least a light-sensitive line-pixel array (7), wherein the light-sensitive line-pixel array (7) is arranged in a direction transverse to the transport direction (4) and is arranged in the image plane (5),
a control device (8) configured to control the light source (6) and/or the light-sensitive line-pixel array (7) and configured to determine a signal generated by the light-sensitive line-pixel array (7), and
an optical device (9) arranged between the object plane (1a) and the image plane (5),
wherein the optical device (9) comprises at least a plurality of rod lenses (10), wherein the rod lenses (10) are arranged in at least one row (14a, 14b) in the direction transverse to the transport direction (4) of the object (2), and
wherein the optical device (9) is configured to guide a light beam (13) emitted from the light source (6) and partially reflected by the object (2) via at least the rod lenses (10) to the light-sensitive line-pixel array (7) and configured to broaden a sampled area in the transport direction (4) before the light beam incides at the light-sensitive line-pixel array (7);
wherein:
- the optical device (9) comprises at least a correction prism (12) configured to split the light beam in the transport direction (4) and to broaden a sampling area in the transport direction (4) of the object (2) on the object plane (1a);
or
- wherein the rod lenses (10) are arranged in two rows,
- wherein the rows are arranged adjacently and parallelly, wherein a first row of the two rows is displaced from a second row of the two rows in the direction transverse to the transport direction (4) by a predetermined distance, and/or wherein an area between the rows is filled by an adhesive fill material;
- wherein an inlet surface (10c, 10d) of each rod lens (10a, 10b) of the two rows is inclined by a predetermined angle (α) with regard to a plane (P), which is orthogonal to a longitudinal axis (L) of each rod lens (10a, 10b).

2. The device according to claim 1, wherein the optical device (9) is configured to guide the light beam and to overlap at least a first portion of the light beam and a second portion of the light beam, and/or
wherein the optical device (9) is configured to reduce a scanning step (14) in the object plane (1a) by a value of 1/4.

3. The device according to anyone of the foregoing claims, wherein the optical device (9) comprises at least a correction lens (11) configured to broaden the light beam and a sampling area in the transport direction (4) on the object plane (1a), and/or
wherein the correction lens (11) is a cylindrical diverging lens and/or a plano concave cylindrical lens.

4. The device according to anyone of the foregoing claims, wherein the correction lens (11) is configured to cover the at least one row of the rod lenses (10) and/or the light-sensitive line-pixel array (7) in the direction transverse to the transport direction (4).

5. The device according to anyone of the foregoing claims, wherein the correction lens (11) is arranged between the rod lenses (10) and the line-pixel array (7) and/or the image plane (5).

6. The device according to claim 5, wherein the correction prism (12) is a triangular prism and/or at least an inlet surface (12a) of the correction prism (12) is inclined in relation to an outlet surface (12b) of a base area of the correction prism (12) by a predetermined angle (α).

7. The device according to claim 5 or 6, wherein the correction prism (12) is configured to be arranged adjacent to the rows of rod lenses (10) and configured to cover at least two adjacent rod lenses (10a, 10b) of different rows in the transport direction (4), respectively, and/or
wherein the correction prism (12) is arranged between the rod lenses (10) and the object plane (1a).

8. The device according to anyone of the foregoing claims, wherein at least an inlet surface (10c, 10d) of the rod lenses (10) is configured to refract the light beam such that a first portion of the light beam and a second portion of the light beam intersect at inciding at the object plane (1a).

9. The device according to anyone of the foregoing claims, wherein a height of a first lateral surface (10e) of the rod lens (10a) of the first row and a height of a first lateral surface (10f) of the rod lens (10b) of the second row are equal,
wherein a height of a second lateral surface (10g) of the rod lens (10a) of the first row and a height of a second lateral surface (10h) of the rod lens (10b) of the second row are equal,
wherein the two first lateral surfaces (10e, 10f) are arranged closer to each other than the two second lateral surfaces (10g, 10h), and
wherein the heights of the two first lateral surfaces (10e, 10f) are greater than the heights of the two second lateral surfaces (10g, 10h), or
wherein the heights of the two second lateral surfaces (10g, 10h) are greater than the heights of the two first lateral surfaces (10e, 10f).

10. The device according to anyone of the foregoing claims, wherein the inlet surface (10c, 10d) is orientated towards the object plane (1a) and/or wherein the inlet surface (10c, 10d) is curved.

11. The device according to anyone of the foregoing claims, wherein the predetermined angle (α) is a value of 2.6 degrees.

12. A method for image recording, the method comprising:
Guiding at least an object (2) in an object plane (1a) using a guiding device (1),
Transporting the object (2) in the object plane (1a) in a transport direction (4) using at least a driving device (3),
Illuminating the object (2) using at least a light source (8) of at least a contact image sensor,
Controlling the light source (8) and/or a light-sensitive line-pixel array (7) of the contact image sensor using the control device (6),
Determining a signal generated by the light-sensitive line-pixel array (7) in an image plane (5) using the control device (6),
Guiding a light beam emitted from the light source (8) and partially reflected by the object (2) via at least rod lenses (10) to a light-sensitive line-pixel array (7) using an optical device (9), wherein the optical device (9) comprises at least the rod lenses (10), and
Broadening by the optical device (9) the light beam in the transport direction (4) of the object (2) before the light beam incides at the light-sensitive line-pixel array (7);
wherein:
- the optical device (9) comprises at least a correction prism (12) configured to split the light beam in the transport direction (4) and to broaden a sampling area in the transport direction (4) of the object (2) on the object plane (1a);
or
- wherein the rod lenses (10) are arranged in two rows,
- wherein the rows are arranged adjacently and parallelly, wherein a first row of the two rows is displaced from a second row of the two rows in the direction transverse to the transport direction (4) by a predetermined distance, and/or wherein an area between the rows is filled by an adhesive fill material;
- wherein an inlet surface (10c, 10d) of each rod lens (10a, 10b) of the two rows is inclined by a predetermined angle (α) with regard to a plane (P), which is orthogonal to a longitudinal axis (L) of each rod lens (10a, 10b).
